# EUROPEAN PATENT SPECIFICATION

(11) **EP 4 011 122 B1**
(45) Date of publication and mention of the grant of the patent: **02.10.2024**
(21) Application number: 20850487.8
(22) Date of filing: 07.08.2020
(51) Int. Cl.: H04W 36/12, H04W 36/14

(54) **METHOD AND APPARATUS FOR 5GS INTERWORKING HANDLING**
VERFAHREN UND VORRICHTUNG ZUR HANDHABUNG VON 5GS-ZUSAMMENARBEIT
PROCÉDÉ ET APPAREIL DE GESTION D'INTEROPÉRABILITÉ 5GS

(30) Priority: 08.08.2019 WO PCT/CN2019/099744
(43) Date of publication of application: 15.06.2022
(73) Proprietor: Telefonaktiebolaget LM Ericsson (publ), 164 83 Stockholm (SE)
(72) Inventor: YANG, Yong, 42836 Kallered (SE); ZHU, Jinyin, Shanghai 200335 (CN)
(74) Representative: Ericsson
(86) International application number: PCT/CN2020/107816
(87) International publication number: WO 2021/023299

(56) References cited:
- WO-A1-2018/085187
- CN-A- 109 155 949
- CN-A- 109 819 486
- US-A1- 2019 159 157
- ERICSSON: "N26 support indication", vol. CT WG4, no. Montreal, Canada; 20190225 - 20190301, 4 March 2019 (2019-03-04), XP051684752, Retrieved from the Internet <URL:http://www.3gpp.org/ftp/3guInternal/3GPP%5FUltimate%5FCRPacks/CP%2D190032%2Ezip> [retrieved on 20190304]
- NOKIA ET AL: "Return Preferred indication over N26", vol. CT WG4, no. Montreal, Canada; 20190225 - 20190301, 4 March 2019 (2019-03-04), XP051684750, Retrieved from the Internet <URL:http://www.3gpp.org/ftp/3guInternal/3GPP%5FUltimate%5FCRPacks/CP%2D190032%2Ezip> [retrieved on 20190304]
- INTEL ET AL: "Clarify related description for Network Sharing and Interworking", vol. SA WG2, no. Sanya, China; 20180416 - 20180420, 10 April 2018 (2018-04-10), XP051437643, Retrieved from the Internet <URL:http://www.3gpp.org/ftp/tsg%5Fsa/WG2%5FArch/TSGS2%5F127%5FSanya/Docs/> [retrieved on 20180410]
- ERICSSON: "EPS to 5GS with network slices", vol. SA WG2, no. West Palm Beach, USA; 20181126 - 20181130, 20 November 2018 (2018-11-20), XP051498670, Retrieved from the Internet <URL:http://www.3gpp.org/ftp/tsg%5Fsa/WG2%5FArch/TSGS2%5F129BIS%5FWest%5FPalm%5FBeach/Docs/S2%2D1811924%2Ezip> [retrieved on 20181120]
- 3GPP: "3rd Generation Partnership Project;Technical Specification Group Services and System Aspects;Procedures for the 5G System;Stage 2(Release 15)", 3GPP TS 23.502 V15.6.0 (2019-06), 30 June 2019 (2019-06-30), pages 1 - 357, XP051753957
- 3GPP: "3rd Generation Partnership Project;Technical Specification Group Radio Access Network;Evolved Universal Terrestrial Radio Access Network(E-UTRAN);S1 Application Protocol (S1AP)(Release 13)", 3GPP TS 36.413 V13.4.0 (2016-09), 30 September 2016 (2016-09-30), pages 1 - 333, XP051172599

## Description

### TECHNICAL FIELD

The present disclosure generally relates to wireless communication, and more particularly, to a method and an apparatus for fifth Generation System (5GS) interworking handling in an Evolved Packet System (EPS).

### BACKGROUND

This section introduces aspects that may facilitate a better understanding of the disclosure. Accordingly, the statements of this section are to be read in this light and are not to be understood as admissions about what is in the prior art or what is not in the prior art.

The Third Generation Partnership Project (3GPP) is currently developing the standards for 5GS, which refers to the new generation of radio systems and network architecture. 5G is expected to provide higher bitrates and coverage than the current LTE systems. Some estimate that 5G will provide bitrates one hundred times higher than LTE offers. 5G is also expected to increase network expandability up to hundreds of thousands of connections. The signal technology of 5G is anticipated to be improved for greater coverage as well as spectral and signaling efficiency.

In view of the co-existence of 4G and 5G communication technologies, 3GPP has defined some procedures concerning inter-system mobility. For example, 3GPP has defined, in TS 23.502, that when a user equipment (UE) establishes a packet data network (PDN) Connection in EPS, a competent Mobility Management Entity (MME) of the UE decides whether the PDN connection supports 5GS Interworking based on information such as user equipment capability, subscription data. 3GPP TS 23.502 has also defined that MME shall delete the PDN connection which is not applicable for 5GS interworking after mobility from EPS to 5GS.

ERICSSON, "N26 support indication", 3GPP DRAFT; 3GPP DRAFT; 29274_CR1937R2_(REL-15)_C4-190582WAS424WAS171_N26 SUPPORT_INDIC ATION_REV4, 3RD GENERATION PARTNERSHIP PROJECT (3GPP), discloses a new indication flag, "5GS Interworking without N26," in the Indication Flags Information Element (IE) within the Create Session Request message to convey whether N26 is supported or not.

NOKIA ETAL, "Return Preferred indication over N26", 3GPP DRAFT; 29274_CR1935_(REL-15)_C4-190119, 3RD GENERATION PARTNERSHIP PROJECT (3GPP), discloses a method for introducing a "Return Preferred" indication in the forward relocation request and context response messages.

INTEL ETAL, "Clarify related description for Network Sharing and Interworking", 3GPP DRAFT; S2-183292_R15_CR23502_NETWORK_SHARING_MISSING_INFO_IN_UE_CONT EXT V1, 3RD GENERATION PARTNERSHIP PROJECT (3GPP), discloses a method for clarifying the behavior of both mobile management entity (MME) and (access and mobility management function) AMF based on the "Return Preferred" indication over N26.

ERICSSON, "EPS to 5GS with network slices", 3GPP DRAFT; S2-1811924 23502_EPS TO 5GS WITH_NETWORK SLICES, 3RD GENERATION PARTNERSHIP PROJECT (3GPP), discloses a method for addressing the risk of the AMF required to release PDU Sessions associated with a single - network slice selection assistance information (S-NSSAls) not allowed according to the UE's subscribed S-NSSAIs during mobility from EPS to 5GS.

### SUMMARY

The invention is defined by the independent claims. Furthermore, the embodiments of the invention are those defined by the claims. Moreover, examples and embodiments, which are not covered by the claims are presented not as embodiments of the invention, but as background art or examples useful for understanding the invention

The existing protocols, however, still fail to cover certain scenarios in which the respective network node, such as an MME or a gateway node, cannot function properly due to a lack of information on the updated 5GS interworking.

Accordingly, there exists a desire for an improvement of 5GS interworking handling.

### BRIEF DESCRIPTION OF THE DRAWINGS

Implementations of the technique presented herein are described herein below with reference to the accompanying drawings, in which:
FIG. 1 illustrates some of the functional blocks within a conventional EPS network architecture and the named interfaces between them;
FIG. 2 illustrates some of the functional blocks within a conventional Fifth Generation (5G) network architecture and the named interfaces between them;
FIG. 3 illustrates an example of 5GS interworking handling in EPS according to an embodiment of the present disclosure;
FIG. 4 illustrates another example of 5GS interworking handling in EPS according to an embodiment of the present disclosure;
FIG. 5 illustrates yet another example of 5GS interworking handling in EPS according to an embodiment of the present disclosure;
FIG. 6 illustrates yet another example of 5GS interworking handling in EPS according to an embodiment of the present disclosure;
FIG. 7 illustrates yet another example of 5GS interworking handling in EPS according to an embodiment of the present disclosure.
FIG. 8 illustrates yet another example of 5GS interworking handling in EPS according to an embodiment of the present disclosure;
FIG. 9 illustrates yet another example of 5GS interworking handling in EPS according to an embodiment of the present disclosure.
FIG. 10 is a flowchart illustrating a method performed by a first MME according to an embodiment of the present disclosure;
FIG. 11 is a flowchart illustrating a method performed by a second MME according to an embodiment of the present disclosure;
FIG. 12 is a flowchart illustrating a method performed by a first MME according to an embodiment of the present disclosure;
FIG. 13 is a flowchart illustrating a method performed by a second MME according to an embodiment of the present disclosure;
FIG. 14 is a flowchart illustrating a method performed by an MME according to an embodiment of the present disclosure;
FIG. 15 is a flowchart illustrating a method performed by a gateway node according to an embodiment of the present disclosure;
FIG. 16 is a block diagram illustrating an exemplary network device according to an embodiment of the present disclosure.

### DETAILED DESCRIPTION

The embodiments of the present disclosure are described in detail with reference to the accompanying drawings.

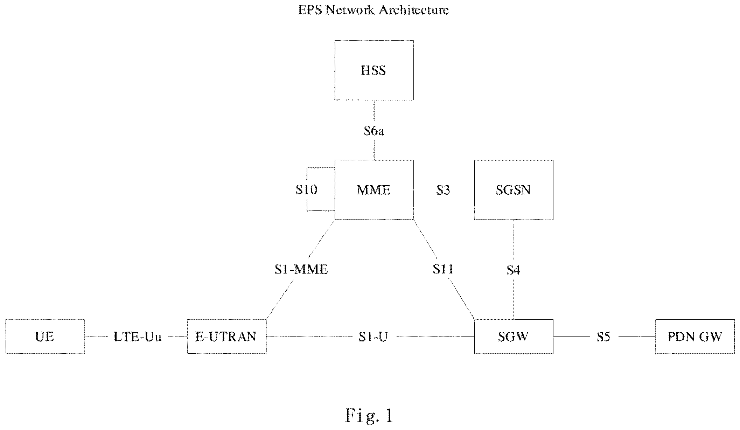

FIG. 1 illustrates some of the functional blocks within a conventional EPS network architecture and the named interfaces between them. To be more specific, FIG. 1 includes a Home Subscriber Service (HSS), an MME, a Serving General Packet Radio Service Support Node (SGSN), a UE, an Evolved Universal Terrestrial Radio Access Network (E-UTRAN) node, an SGW, and a PGW. The named interfaces are logical connections between entities.

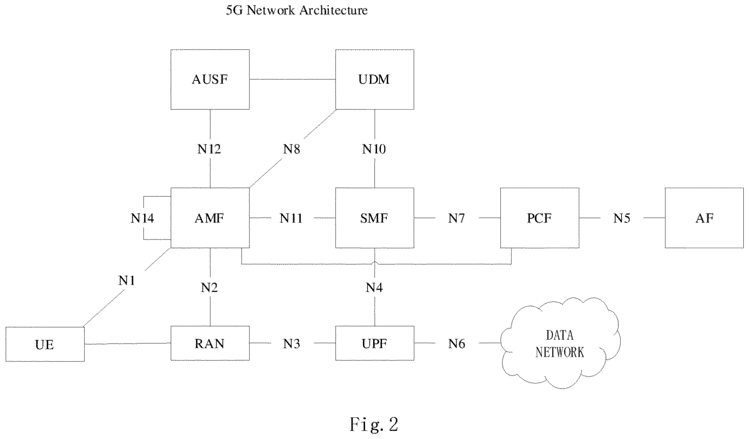

FIG. 2 illustrates some of the functional blocks within a 5G network architecture and the named interfaces between them. To be more specific, FIG. 2 includes an Authentication Server Function (AUSF), a Unified Data Management (UDM) block, a Core Access and Authentication Management Function (AMF), an SMF, a PCF, an Application Function (AF), a UE, a (Radio) Access Network ((R)AN), a User Plane Function (UPF), and a Data Network (DN). For simplicity, the (R)AN will be hereinafter referred to as "the RAN." The named interfaces are logical connections between entities.

References in the specification to "one embodiment", "an embodiment", "an example", "some embodiments" and the like indicate that the embodiment or example described may include a particular feature, structure, or characteristic, but it is not necessary that every embodiment or example includes the particular feature, structure, or characteristic. Moreover, such phrases are not necessarily referring to the same embodiment or example. Further, when a particular feature, structure, or characteristic is described in connection with an embodiment or an example, it is submitted that it is within the knowledge of one skilled in the art to affect such feature, structure, or characteristic in connection with other embodiments whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example embodiments. As used herein, the term "and/or" includes any and all combinations of one or more of the associated listed terms.

The terminology used herein is for the purpose of describing particular embodiments only and is not intended to be liming of example embodiments. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

In the following description and claims, unless defined otherwise, all technical and scientific terms used herein have the same meaning as commonly understood by one of ordinary skills in the art to which this disclosure belongs.

As described above, during inter-MME mobility, because the 5GS interworking status is not received from a source MME, a target MME does not know the 5GS interworking status of the PDN connection which makes the target MME not able to decide which PDN connection can be transferred to AMF during subsequent mobility from EPS to 5GS. This cannot fulfil the requirement as defined in TS 23.502 Version 16.1.1 (Technical Specification Group Services and System Aspects; Procedures for the 5G System; Stage 2 (Release16), hereinafter referred to as "TS 23.502"), and results in hanging PDN connection(s) in the upstream nodes such as SGW, PGW-C, PCRF or PCF.

3GPP TS 23.502 has defined that when UE establishes a PDN Connection in EPS, the MME decides if the PDN connection supports 5GS Interworking based on information such as UE capability, subscription data. As specified in clause 4.11.0a.4, when the UE requests to establish a PDN connection to an Access Point Name (APN), the MME may use the UE's support for 5GC NAS indication included in the UE Network Capability and/or UE's subscription from HSS that includes UE's mobility restriction parameters related to 5GS and/or indication of support for interworking with 5GS for this APN to determine if PGW-C+SMF or a standalone PGW-C should be selected. It is noted that, if restriction for Core Network Type indicates that the UE can access to 5GC, it implies that the UE has 5G subscription data.

3GPP TS 23.502 has also defined that an MME shall delete a PDN connection which is not applicable for 5GS interworking after mobility from EPS to 5GS. Without knowing the 5GS interworking status, however, the MME may have difficulty in deciding which PDN connection(s) should be deleted.

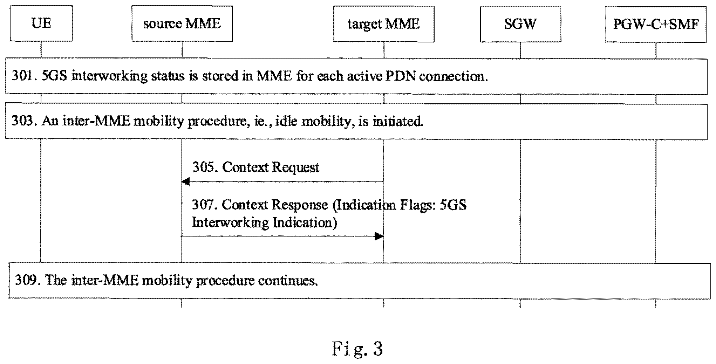

FIG. 3 illustrates an example of 5GS interworking handling in EPS during inter-MME mobility according to the present disclosure. The steps of FIG. 3 are described as below.

Step 301, 5GS interworking status may be stored in an MME for each active PDN connection. The 5GS interworking status indicates whether the PDN connection supports interworking between an EPS and a 5GS.

The 5GS interworking status may be stored in an MME in the UE context (as specified in 3GPP TS 23.401, Version 16.3.0, Technical Specification Group Services and System Aspects; General Packet Radio Service (GPRS) enhancements for Evolved Universal Terrestrial Radio Access Network (E-UTRAN) access; Stage 2 (Release 16), hereinafter referred to as "TS 23.401", clause 5.7.2). In particular, the 5GS interworking status may be determined based on UE network capability and/or UE subscription data.

Step 303, an inter-MME mobility procedure is initiated from a source MME to a target MME. In the present example, the inter-MME mobility procedure is an idle mobility.

Step 305, the target MME sends a context request to the source MME.

Step 307, in response to the context request, the source MME may send a context response back to the target MME which includes the 5GS interworking status. As an example, the 5GS interworking status may be included in the context response in the form of a 5GS Interworking Indication, "5GSIWKI" (as specified in 3GPP TS 29.274, Version 16.0.0, Technical Specification Group Services and System Aspects; Policy and Charging Control Framework for the 5G System; Stage 2 (Release 16), hereinafter referred to as "TS 29.274," clause 8.12). The 5GS interworking indication may further be included in an Indication Flags IE for each PDN connection, e.g., in MME/SGSN/AMF UE EPS PDN Connections IE. It can be understood that an alternative new indication may also be considered.

Step 309, the idle mobility continues.

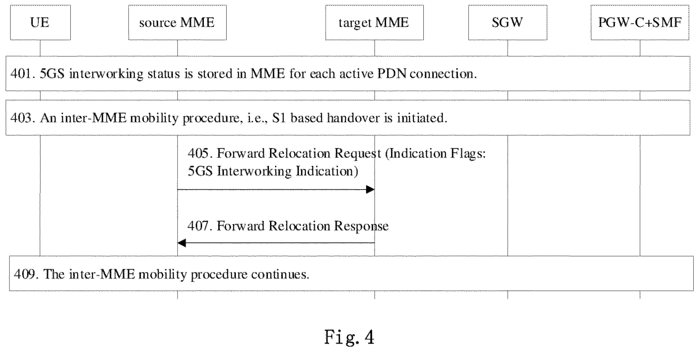

FIG. 4 illustrates another example of 5GS interworking handling in EPS during inter-MME mobility according to the present disclosure. The steps of FIG. 4 are described as below.

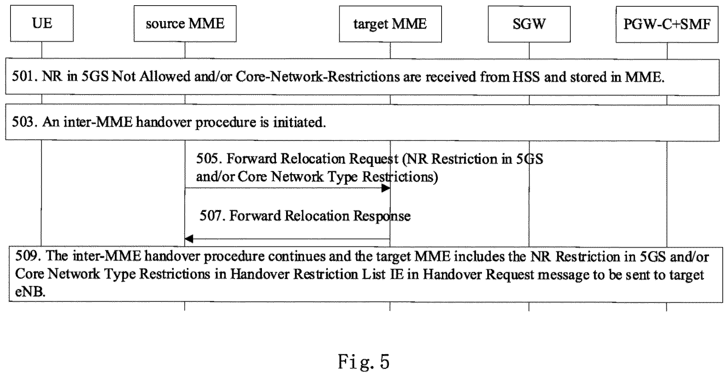

Step 401, similar to step 301 described with reference to FIG.3, 5GS interworking status may be stored in an MME for each active PDN connection. The 5GS interworking status may indicate whether the PDN connection supports interworking between an EPS and a 5GS. The 5GS interworking status may further be stored in an MME in the UE context, as specified in 3GPP TS 23.401. In particular, the 5GS interworking status may be determined based on UE network capability and/or UE subscription data.

Step 403, an inter-MME mobility procedure is initiated from a source MME to a target MME. In the present example, the inter-MME mobility procedure is an S1 based handover procedure.

Step 405, the source MME sends a Forward Relocation Request to a target MME which includes the 5GS interworking status. As an example, the 5GS interworking status may be included, in the form of a 5GS Interworking Indication, "5GSIWKI", as specified in 3GPP TS 29.274, in an Indication Flags IE for each PDN connection, e.g., in MME/SGSN/AMF UE EPS PDN Connections IE. It can be understood that an alternative new indication may also be considered.

Step 407, the target MME sends a Forward Relocation Response back to the source MME in response to the Forward Relocation Request.

Step 409, the S1 based handover procedure continues.

The 5GS interworking indication sent from the source MME to the target MME enables the target MME to correctly determine, for a given PDN connection, whether it is allowed to be moved to 5GS during inter-MME mobility procedure. This can avoid the hanging PDN connections in upstream nodes, e.g., SGW, PGW, PCRF or PCF, when mobility from EPS to 5GS happens.

Further, during inter-MME handover, because the "NR Restriction in 5GS" and/or "Core Network Type Restrictions" are not received from the source MME, the target MME cannot set "NR Restriction in 5GS" and "Core Network Type Restrictions" in the Handover Restriction List IE in Handover Request message correctly which is not aligned with what is defined in 3GPP TS 36.413 Version 15.6.0, Technical Specification Group Radio Access Network; Evolved Universal Terrestrial Radio Access Network (E-UTRAN); S1 Application Protocol (S1AP); (Release 15), hereinafter referred to as "TS 36.413". The absence of "NR Restriction in 5GS" and "Core Network Type Restrictions" may thus result in misbehavior in a target eNB which should inform a UE which target cell(s) can be accessed.

FIG.5 shows another example of 5GS interworking handling in EPS during inter-MME handover according to the present disclosure. The steps of FIG. 5 are described as below.

Step 501, "NR in 5GS Not Allowed" and/or "Core-Network-Restrictions" may be received from HSS and stored in a source MME. "NR in 5GS Not Allowed" may be obtained from Access-Restriction-Data in subscription data. It is noted that this step is optional in case "NR in 5GS Not Allowed" and "Core-Network-Restrictions" are already stored in the source MME.

"Access-Restriction-Data" and "Core-Network-Restrictions" are specified in 3GPP TS 29.272 Version 15.8.0 (Technical Specification Group Core Network and Terminals; Evolved Packet System (EPS); Mobility Management Entity (MME) and Serving GPRS Support Node (SGSN) related interfaces based on Diameter protocol (Release 15), hereinafter referred to as "TS 29.272"), clause 7.3.31 and 7.3.230, respectively.

Step 503, an inter-MME handover procedure from the source MME to a target MME is initiated.

Step 505, the source MME sends a "Forward Relocation Request" message to the target MME, in which "NR Restriction in 5GS" and/or "Core Network Type Restrictions" are included. Such information may be included in the Mobility Management (MM) Context, or as a separate information element included in the message level.

Step 507, the target MME sends to the source MME a "Forward Relocation Response" message.

Step 509, the inter-MME handover procedure continues and the target MME may include the "NR Restriction in 5GS" and/or "Core Network Type Restrictions" in Handover Restriction List IE in Handover Request message to be sent to a target eNB.

TS 36.413 has defined the Handover Restriction List IE in Handover Request message and that the Handover Restriction List IE includes "NR Restriction in 5GS" and "Core Network Type Restrictions" (clause 9.2.1.22).

As specified in clause 9.1.5.4 of TS 36.413, Handover Request message is sent by an MME to a target eNB to request the preparation of resources. In particular, TS 36.413 specifies in clause 8.4.2.2 that If the Handover Restriction List IE is contained in the Handover Request message, the target eNB shall store this information in the UE context. On the other hand, If the Handover Restriction List IE is not contained in the Handover Request message, the target eNB shall consider that no roaming and no access restriction apply to the UE.

In view of the foregoing, since the target eNB can obtain a complete Handover Restriction List IE which includes "NR Restriction in 5GS" and "Core Network Type Restrictions" during inter-MME handover procedure, the misbehavior in eNB can be avoided.

Still further, in a network where N26 is deployed (i.e. 5GSNN26 is not set to "1"), when 5GS interworking status is changed, e.g., due to UE network capability change (i.e., N1 mode is disabled or enabled) or subscription data change (i.e., Core-Network-Restrictions change, or APN level Interworking-5GS-Indicator change), PGW-C+SMF cannot get the updated information. This may result in some misbehavior and waste of resource in the network or result in that the PDN connection cannot be enabled for 5GS interworking in time.

As an example, when UE Network capability is changed from Enabled N1 to disable N1, PGW-C+SMF may still send 5G related QoS parameter via the (e)PCO IE, which may lead to unpredictable error in UE, and extra/useless signaling towards UE over air and the network even if UE ignores the content of (e)PCO for 5GS parameters.

As another example: when UE supports N1 mode and the restriction of 5GS interworking by subscription data is removed e.g., Core-Network-Restrictions does not restrict 5GC anymore or Interworking-5GS-Indicator is set, PGW-C+SMF shall be notified to be able to send 5GS parameters via the (e)PCO IE, to facilitate the mobility towards 5GS.

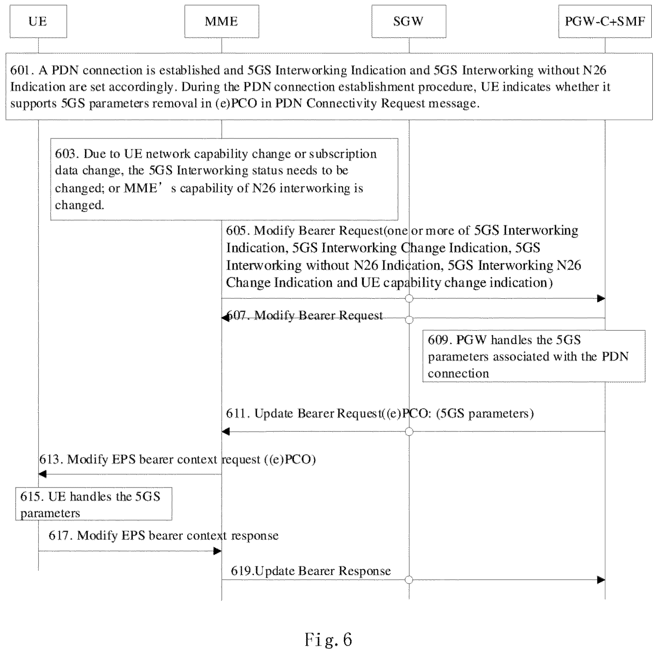

FIG.6 shows another example of 5GS interworking handling in EPS according to the present disclosure. The steps of FIG. 6 are described as below.

Step 601, a PDN connection is established between a UE and a gateway node, which may be a PGW-C combined with an SMF, hereinafter PGW-C+SMF. 5GS interworking indication and 5GS interworking without N26 indication are set accordingly. During the PDN connection establishment procedure, UE may indicate whether it supports 5GS parameters removal in (e)PCO in PDN connectivity request message.

Step 603, due to UE network capability change or subscription data change, the 5GS interworking status or MME's capability of N26 interworking may be changed.

The 5GS interworking status may be changed from supported (i.e., the respective PDN connection supports 5GS interworking) to not supported (i.e., the respective PDN connection does not support 5GS interworking), or from not supported to supported. The MME's capability of N26 interworking may be changed during inter-MME inter-PLMN without SGW change mobility procedure.

3GPP TS 24.501 Version 16.1.0 has defined that UE can disable N1 mode and 3GPP TS 24.301 Version 16.1.1 has defined the N1 mode in UE network capability IE and that UE shall initiate TAU procedure to notify the MME the changed UE network capability, e.g., when N1 mode is disabled or enabled.

Step 605, the MME sends a Modify Bearer Request via an SGW to the PGW-C+SMF.

The MME may use another message, e.g., Change Notification Request instead of the Modify Bearer Request.

The Modify Bearer Request may include one or more of 5GS Interworking Indication, 5GS Interworking Change Indication, 5GS Interworking without N26 Indication, 5GS Interworking N26 Change Indication and UE capability change indication. The 5GS Interworking Indication indicates whether 5GS interworking is supported; 5GS Interworking Change Indication indicates whether 5GS Interworking status is changed; 5GS Interworking without N26 Indication indicates whether 5GS Interworking without N26 is supported; 5GS Interworking N26 Change Indication indicates whether MME supporting of 5GS interworking with N26 is changed; UE capability change indication indicates whether the 5GS interworking status change is due to UE network capability change.

The above-mentioned indications may be included reusing existing Indication Flags IE or included in another new IE, e.g., PGW Indication Flags.

In the present example, the Modify Bearer Request comprises updated information indicating that the 5GS interworking status with respect to the PDN connection is changed from not supported to supported.

Step 607, the PGW-C+SMF sends a Modify Bearer Response via the SGW to the MME.

Step 609, based on the received Modify Bearer Request, the PGW-C generates the 5GS parameters associated with the PDN connection and each bearer of the PDN connection.

The 5GS parameters associated with the PDN connection comprise S-NSSAI, QoS rules, Session-AMBR and QoS flow description. Among the 5GS parameters, QoS rules, Session-AMBR and QoS flow description are 5GS QoS parameters.

Step 611, the PGW-C+SMF sends an Update Bearer Request to the MME via the SGW for each bearer of the PDN. The Update Bearer Request comprises the 5GS parameters generated by the PGW-C+SMF.

The Update Bearer Request may include an (e)PCO IE which may further include parameters such as the "S-NSSAI", "QoS rules", "Session-AMBR", and "QoS flow descriptions". 3GPP TS 24.008 Version 16.1.0 has defined the 5GS related parameters in (e)PCO, such as S-NSSAI, Session-AMBR, QoS rules, QoS flow descriptions. The (e)PCO definition is referred to by 3GPP TS 24.301. Furthermore, if a PDU Session ID is originally generated by the PGW-C+SMF for the PDN connection, PGW-C+SMF may also include the PDC session ID in the (e)PCO IE.

Step 613, the MME may send Modify EPS Bearer Context Request to a UE. In the message, the (e)PCO received from PGW-C+SMF is transparently forwarded to UE.

Step 615, upon receiving the new 5GS parameters, i.e., "S-NSSAI", "QoS rules", "Session-AMBR", and "QoS flow descriptions", the UE associates them with the PDN connection or each bearer of the PDN connection. Such PDN connection is considered as eligible for 5GS interworking or eligible for 5GS interworking with or without N26 from now.

Step 617, the UE responds to the MME with Modify EPS Bearer Context Response.

Step 619, the MME sends Update Bearer Response to the PGW-C+SMF via the SGW.

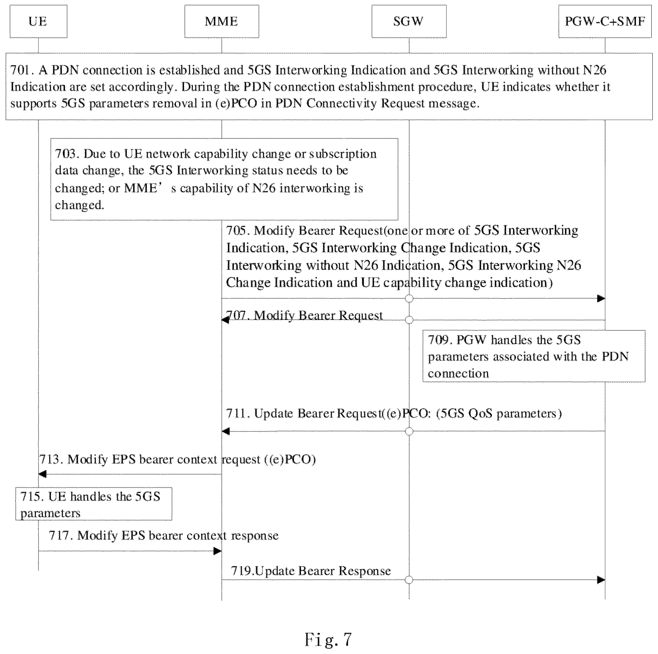

FIG.7 shows another example of 5GS interworking handling in EPS according to the present disclosure. The steps of FIG. 7 are described as below.

Steps 701, 703, 705 are similar to steps 601, 603 and 605, respectively, the description of which thus will not be repeated for the sake of conciseness. It is noted, however, that in the present example referring to FIG. 7, the Modify Bearer Request comprises updated information indicating that the 5GS interworking status with respect to the PDN connection is changed from without N26 to with N26 while the 5GS interworking is kept supported.

Step 707, the PGW-C+SMF sends a Modify Bearer Response via the SGW to the MME.

Step 709, based on the received Modify Bearer Request, the PGW-C generates the 5GS QoS parameters associated with the PDN connection and each bearer of the PDN connection.

Step 711, the PGW-C+SMF sends an Update Bearer Request to the MME via the SGW for each bearer of the PDN. The Update Bearer Request comprises the 5GS QoS parameters generated by the PGW-C+SMF.

The Update Bearer Request may include an (e)PCO IE which may further include parameters such as the "QoS rules", "Session-AMBR", and "QoS flow descriptions". Furthermore, if a PDU Session ID is originally generated by the PGW-C+SMF for the PDN connection, PGW-C+SMF may also include the PDC session ID in the (e)PCO IE.

Step 713, the MME may send Modify EPS Bearer Context Request to a UE. In the message, the (e)PCO received from PGW-C+SMF is transparently forwarded to UE.

Step 715, upon receiving new 5GS QoS parameters, i.e., "QoS rules", "Session-AMBR", and "QoS flow descriptions", the UE associates them with the PDN connection or each bearer of the PDN connection. Such PDN connection is considered as eligible for 5GS interworking with N26 from now.

Step 717, the UE responds to the MME with Modify EPS Bearer Context Response.

Step 719, the MME sends Update Bearer Response to the PGW-C+SMF via the SGW.

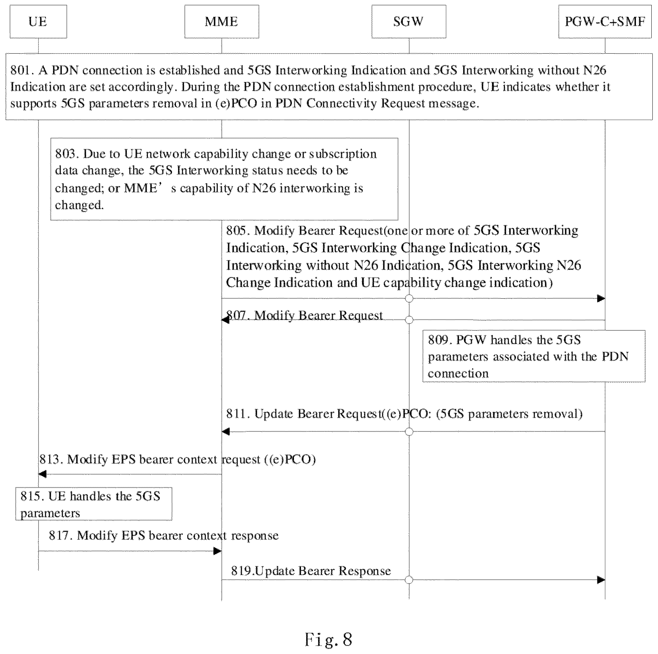

FIG.8 shows another example of 5GS interworking handling in EPS according to the present disclosure. The steps of FIG. 8 are described as below.

Steps 801, 803, 805 are similar to steps 601, 603 and 605, respectively, the description of which thus will not be repeated for the sake of conciseness. It is noted, however, that in the present example referring to FIG. 8, the Modify Bearer Request comprises updated information indicating that the 5GS interworking status with respect to the PDN connection is changed from supported to not supported.

Step 807, the PGW-C+SMF sends a Modify Bearer Response via the SGW to the MME.

Step 809, based on the received Modify Bearer Request, the PGW-C+SMF removes the 5GS parameters, and generates an instruction on removing the 5GS parameters associated with the PDN connection and each bearer of the PDN connection. However, PGW-C+SMF may keep the PDU session ID as being used.

Step 811, the PGW-C+SMF sends an Update Bearer Request to the MME via the SGW for each bearer of the PDN. The Update Bearer Request comprises the instruction in the form of a "5GS parameters removal" parameter, which in turn is included in the (e)PCO IE. Furthermore, if a PDU Session ID is originally generated by the PGW-C+SMF for the PDN connection, PGW-C+SMF may also include the PDC session ID in the (e)PCO IE.

Step 813, the MME may send Modify EPS Bearer Context Request to a UE. In the message, the (e)PCO received from PGW-C+SMF is transparently forwarded to UE.

Step 815, upon receiving the 5GS parameters removal in (e)PCO, UE removes all 5GS parameters, i.e., "S-NSSAI", "QoS rules", "Session-AMBR", and "QoS flow descriptions", associated with the PDN connection. However, the UE may keep the PDU session ID as being used.

Step 817, the UE responds to the MME with Modify EPS Bearer Context Response.

Step 819, the MME sends Update Bearer Response to the PGW-C+SMF via the SGW.

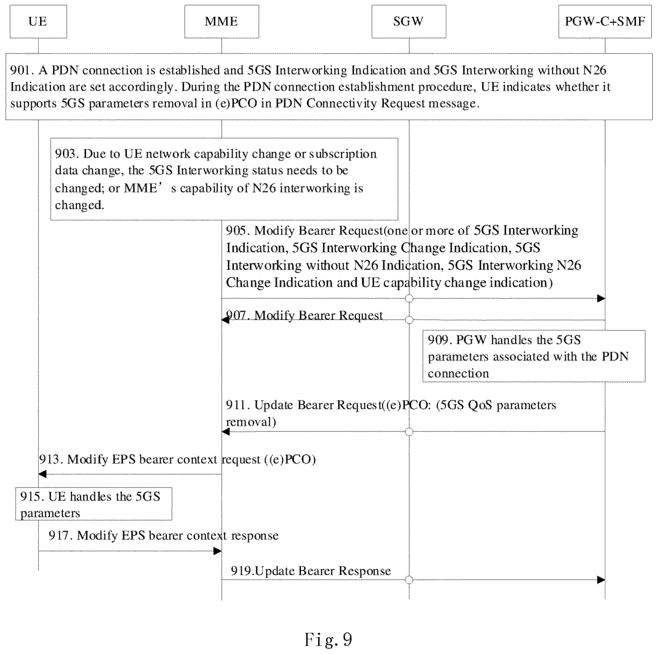

FIG.9 shows another example of 5GS interworking handling in EPS according to the present disclosure. The steps of FIG. 9 are described as below.

Steps 901, 903, 905 are similar to steps 601, 603 and 605, respectively, the description of which thus will not be repeated for the sake of conciseness. It is noted, however, that in the present example referring to FIG. 9, the Modify Bearer Request comprises updated information indicating that the 5GS interworking status with respect to the PDN connection is changed from with N26 to without N26 while the 5GS interworking is kept supported.

Step 907, the PGW-C+SMF sends a Modify Bearer Response via the SGW to the MME.

Step 909, based on the received Modify Bearer Request, the PGW-C+SMF removes the 5GS QoS parameters, and generates an instruction on removing the 5GS QoS parameters associated with the PDN connection and each bearer of the PDN connection. However, PGW-C+SMF may keep the PDU session ID as being used.

Step 911, the PGW-C+SMF sends an Update Bearer Request to the MME via the SGW for each bearer of the PDN. The Update Bearer Request comprises the instruction in the form of a "5GS QoS parameters removal" parameter, which in turn is included in the (e)PCO IE.

Step 913, the MME may send Modify EPS Bearer Context Request to a UE. In the message, the (e)PCO received from PGW-C+SMF is transparently forwarded to UE.

Step 915, upon receiving the 5GS QoS parameters removal in (e)PCO, UE removes all 5GS QoS parameters, i.e., "QoS rules", "Session-AMBR", and "QoS flow descriptions", associated with the PDN connection. However, the UE may keep the PDU session ID as being used.

Step 917, the UE responds to the MME with Modify EPS Bearer Context Response.

Step 919, the MME sends Update Bearer Response to the PGW-C+SMF via the SGW.

It is noted that, if 5GS Interworking status is changed from supported to not supported and UE capability change indication is set which means N1 mode is disabled, the steps performed by PGW-C+SMF for informing the UE may be skipped.

In view of the above, PGW-C+SMF can be updated with the change of 5GS interworking status. This can for example avoid the extra signaling and other resource cost used for providing 5GS parameters to UE if the 5GS interworking is changed from supported to not supported; this can automatically enable the PDN connection to be eligible for 5GS interworking if the 5GS interworking is changed from not supported to supported

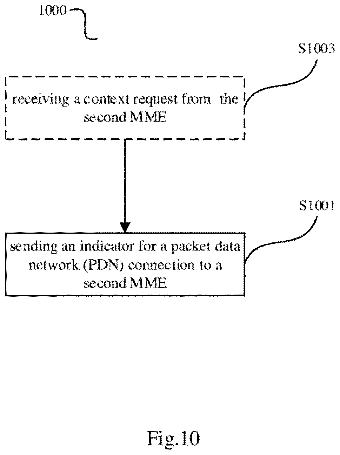

FIG. 10 is a flowchart illustrating a method 1000 according to an embodiment of the present disclosure. The method 1000 is performed at a network device, e.g. a first MME.

In step S1001, the first MME sends an indicator for a PDN connection to a second MME. In an embodiment, the indicator may indicate whether the PDN connection supports interworking between an EPS and a 5GS. In an embodiment, the indicator may be determined by the first MME based on UE network capability and/or UE subscription data. In an embodiment, the indicator indicates whether the PDN connection is allowed to be moved from an evolved packet system (EPS) to a fifth generation system (5GS). In an embodiment, the indicator indicates whether the PDN connection is allowed to be moved from the EPS to the 5GS via N26.

In an embodiment, prior to sending the indicator to the second MME, the first MME may first receive a context request from the second MME, step S1003. The step S1001 of sending may then further comprise sending a context response message to the second MME. The indicator may be included in the context response message for the PDN connection. In an example of the embodiment, the indicator may be included in an indication flags IE of the context response message for the PDN connection.

In an embodiment, the step S1001 of sending may comprise sending a forward relocation request to the second MME. The indicator may be included in the forward relocation request for the PDN connection. In an example of the embodiment, the indicator may be included in an indication flags IE of the forward relocation request for the PDN connection

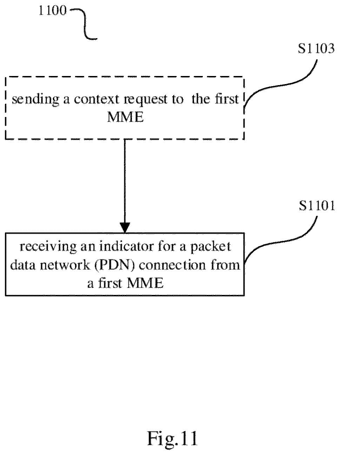

FIG. 11 is a flowchart illustrating a method 1100 according to an embodiment of the present disclosure. The method 1100 is performed at a network device, e.g. a second MME.

In step S1101, the second MME receives an indicator for a PDN connection from a first MME. In an embodiment, the indicator may indicate whether the PDN connection supports interworking between an EPS and a 5GS. In an embodiment, the indicator may be determined based on UE network capability and/or UE subscription data. In an embodiment, the indicator indicates whether the PDN connection is allowed to be moved from an evolved packet system (EPS) to a fifth generation system (5GS). In an embodiment, the indicator indicates whether the PDN connection is allowed to be moved from the EPS to the 5GS via N26.

In an embodiment, prior to receiving the indicator from the first MME, the second MME may first send a context request to the first MME, step S1103. The step S1101 of receiving may then further comprise receiving a context response message from the first MME. The indicator may be included in the context response message for the PDN connection. In an example of the embodiment, the indicator may be included in an indication flags IE of the context response message for the PDN connection.

In an embodiment, the step S1101 of receiving may comprise receiving a forward relocation request from the first MME. The indicator may be included in the forward relocation request for the PDN connection. In an example of the embodiment, the indicator may be included in an indication flags IE of the forward relocation request for the PDN connection.

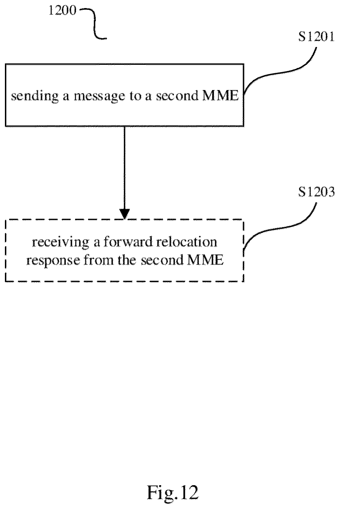

FIG. 12 is a flowchart illustrating a method 1200 according to an embodiment of the present disclosure. The method 1200 is performed at a network device, e.g. a first MME.

In step 1201, the first MME sends a message to a second MME. The message may comprise 5GS related restriction data which is applicable to a UE. In an embodiment, the 5GS related restriction data may comprise at least one of NR restriction in 5GS and Core Network Type Restrictions.

In an embodiment, the message may be a forward relocation request. In an example of this embodiment, the method 1200 may further comprise a step S1203 of receiving a forward relocation response from the second MME.

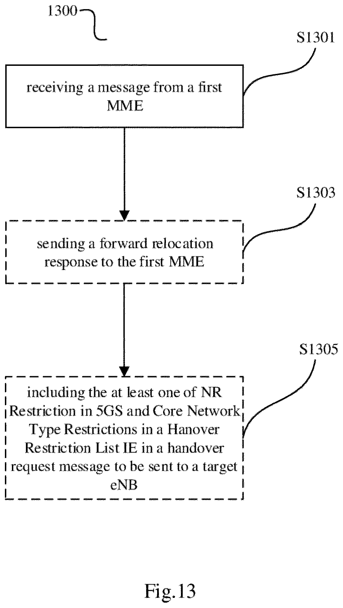

FIG. 13 is a flowchart illustrating a method 1300 according to an embodiment of the present disclosure. The method 1300 is performed at a network device, e.g. a second MME.

In step 1301, the second MME receives a message from a first MME. The message may comprise 5GS related restriction data which is applicable to a UE. In an embodiment, the 5GS related restriction data may comprise at least one of NR restriction in 5GS and Core Network Type Restrictions.

In an embodiment, the message may be a forward relocation request. In an example of this embodiment, the method 1300 may further comprise a step S1303 of sending a forward relocation response to the first MME.

In an embodiment, the method 1300 may further comprise a step 1305 of including the at least one of NR Restriction in 5GS and Core Network Type Restrictions in a Hanover Restriction List IE in a handover request message to be sent to a target eNB.

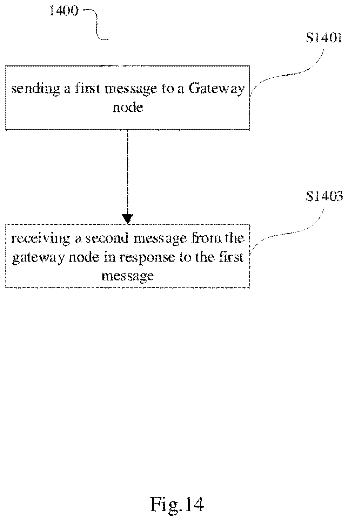

FIG. 14 is a flowchart illustrating a method 1400 according to an embodiment of the present disclosure. The method 1400 is performed at a network device, e.g. an MME.

In step 1401, the MME sends a first message to a gateway node. The first message may comprise updated information, the updated information indicating a change of interworking status with a fifth generation system for a PDN connection.

In an embodiment, the gateway node may be a PGW-C combined with an SMF.

In an embodiment, the method 1400 may further comprise the step 1403 of receiving a second message from the gateway node in response to the first message. In an example of this embodiment, the second message may comprise 5GS parameters associated with the PDN connection, the 5GS parameters being generated by the gateway node. In another example of this embodiment, the second message may comprise 5GS QoS parameters associated with the PDN connection. In yet another example of this embodiment, the second message may comprise a first instruction on removing 5GS parameters associated with the PDN connection. In yet another example of this embodiment, the second message may comprise a second instruction on removing 5GS QoS parameters associated with the PDN connection.

In an embodiment, the MME communicates with the gateway node via an SGW.

In an embodiment, the 5GS parameters associated with the PDN connection comprise S-NSSAI, QoS rules, Session-AMBR and QoS flow description, and the 5GS QoS parameters associated with the PDN connection comprise QoS rules, Session-AMBR and QoS flow description.

In an embodiment, the first message may be a modify bearer request or a change notification request.

In an embodiment, the second message may be an update bearer request. In an example of the embodiment, the update bearer request comprises an (e)PCO IE for carrying the 5GS parameters or 5GS QoS parameters. As an example, the (e)PCO IE may further comprise a PDU session ID, when the PDU session ID is originally generated by the gateway node for the PDN connection. The (e)PCO IE may be transparently forwarded by the MME to a UE associated with the PDN connection.

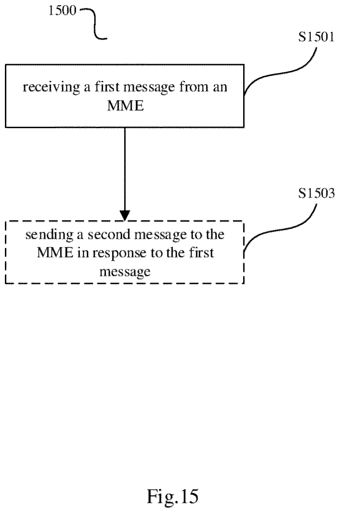

FIG. 15 is a flowchart illustrating a method 1500 according to an embodiment of the present disclosure. The method 1500 is performed at a network device, e.g. a gateway node.

In step 1501, the MME receives a first message from an MME. The first message may comprise updated information, the updated information indicating a change of interworking status with a fifth generation system for a PDN connection.

In an embodiment, the gateway node may be a PGW-C combined with an SMF.

In an embodiment, the method 1500 may further comprise the step 1503 of sending a second message to the MME in response to the first message. In an example of this embodiment, the second message may comprise 5GS parameters associated with the PDN connection, the 5GS parameters being generated by the gateway node. In another example of this embodiment, the second message may comprise 5GS QoS parameters associated with the PDN connection. In yet another example of this embodiment, the second message may comprise a first instruction on removing 5GS parameters associated with the PDN connection. In yet another example of this embodiment, the second message may comprise a second instruction on removing 5GS QoS parameters associated with the PDN connection.

In an embodiment, the gateway node communicates with the MME via an SGW.

In an embodiment, the 5GS parameters associated with the PDN connection comprise S-NSSAI, QoS rules, Session-AMBR and QoS flow description, and the 5GS QoS parameters associated with the PDN connection comprise QoS rules, Session-AMBR and QoS flow description.

In an embodiment, the first message may be a modify bearer request or a change notification request.

In an embodiment, the second message may be an update bearer request. In an example of the embodiment, the update bearer request may comprise an (e)PCO IE for carrying the 5GS parameters or 5GS QoS parameters. As an example, the (e)PCO IE may further comprise a PDU session ID, when the PDU session ID is originally generated by the gateway node for the PDN connection. The (e)PCO IE may be transparently forwarded by the MME to a UE associated with the PDN connection.

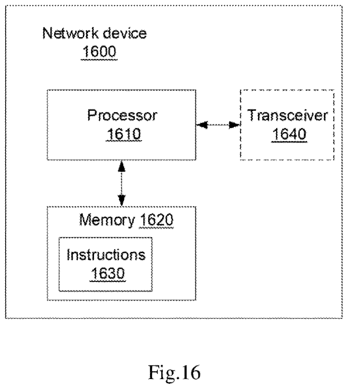

Fig. 16 is a block diagram of a network device 1600 according to embodiments of the present disclosure, which can be, e.g., the network device as described in connection with Figs. 10 to 15.

The network device 1600 includes a processor 1610 and a memory 1620. Optionally, the network device 1600 may further include a transceiver 1640 coupled to the processor 1610. The memory 1620 contains instructions 1630 executable by the processor 1610 to cause the network device 1600 to perform the actions of one of the methods 1000, 1100, 1200, 1300, 1400 and 1500, respectively. Take method 100 for example, the memory 1620 may contain instructions that, when executed by the processor 1610, cause the network device 1600 to send an indicator for a PDN connection to a second MME. In an embodiment, the indicator indicates whether the PDN connection supports interworking between an EPS and a 5GS. In an embodiment, the indicator indicates whether the PDN connection is allowed to be moved from an evolved packet system (EPS) to a fifth generation system (5GS). In an embodiment, the indicator indicates whether the PDN connection is allowed to be moved from the EPS to the 5GS via N26.

It should be noted that, more details described with reference to Figs. 10-15 also apply here and may be omitted.

The memory 1620 may be of any type suitable to the local technical environment and may be implemented using any suitable data storage technology, such as semiconductor based memory terminal devices, magnetic memory terminal devices and systems, optical memory terminal devices and systems, fixed memory and removable memory, as non-limiting examples.

The processor 1610 may be of any type suitable to the local technical environment, and may include one or more of general purpose processors, special purpose processors (e.g., Application Specific Integrated Circuit (ASICs)), microprocessors, digital signal processors (DSPs) and processors based on multicore processor architecture, as non-limiting examples.

The scope of the disclosure is only defined by the claims as attached.

## Claims

1. A method (1000) performed by a first mobility management entity, MME, the method comprising:
sending (S1001) an indicator for a packet data network, PDN, connection to a second MME,
wherein the indicator indicates whether the PDN connection is allowed to be moved from an evolved packet system, EPS, to a fifth generation system, 5GS, and
wherein the indicator is included in an indication flags information element, IE, of context response message or forward relocation request for the PDN connection .

2. The method of claim 1, wherein the indicator indicates whether the PDN connection is allowed to be moved from the EPS to the 5GS via N26.

3. The method of claim 1 or 2, wherein the indicator is determined based on user equipment, UE, network capability and/or UE subscription data.

4. The method of any one of claims 1-3, wherein the method further comprises:
receiving (S1003) a context request from the second MME; and
wherein the sending an indicator for a PDN connection to a second MME, further comprises:
sending a context response message to the second MME, wherein the indicator is included in the context response message for the PDN connection.

5. The method of any one of claims 1-3, wherein the sending an indicator for a PDN connection to a second MME, further comprises:
sending a forward relocation request to the second MME, wherein optionally the indicator is included in an indication flags information element, IE, of the forward relocation request for the PDN connection.

6. A method (1400) performed by a mobility management entity, MME, the method comprising:
sending (S1401) a first message to a gateway node;
wherein the first message comprises updated information, the updated information indicating a change of interworking status with a fifth generation system, 5GS, for a packet data network, PDN, connection.

7. The method of claim 6, wherein the gateway node is a PDN gateway control plane, PGW-C, combined with a session management function, SMF.

8. The method of claim 6 or 7, wherein the method further comprises:
receiving (S1403) a second message from the gateway node in response to the first message.

9. The method of claim 8, wherein the second message comprises 5GS parameters associated with the PDN connection, wherein the 5GS parameters are generated by the gateway node; or
wherein the second message comprises 5GS Quality of Service, QoS, parameters associated with the PDN connection; or
wherein the second message comprises a first instruction on removing 5GS parameters associated with the PDN connection; or
wherein the second message comprises a second instruction on removing 5GS QoS parameters associated with the PDN connection.

10. The method of any one of claims 6 to 9, wherein the MME communicates with the gateway node via a serving gateway, SGW, and/or wherein the 5GS parameters associated with the PDN connection comprise Single Network Slice Selection Assistance Information, S-NSSAI, QoS rules, Session-Aggregate Maximum Bit Rate, AMBR, and QoS flow description, and wherein the 5GS QoS parameters associated with the PDN connection comprise QoS rules, Session-AMBR and QoS flow description.

11. The method of any one of claims 8 to 10, wherein the first message is a modify bearer request or a change notification request; and/or
wherein the second message is an update bearer request.

12. The method of claim 11, wherein the update bearer request comprises an (e)PCO IE for carrying the 5GS parameters or 5GS QoS parameters;
wherein the (e)PCO IE further comprises a PDU session ID, when the PDU session ID is originally generated by the gateway node for the PDN connection;
wherein the (e)PCO IE is transparently forwarded by the MME to a UE associated with the PDN connection.

13. A first mobility management entity, MME, comprising a processor and a memory, the memory comprising instructions executable by the processor whereby the first MME is operative to operative to perform the method according to any one of claims 1-5.

14. A mobility management entity, MME, comprising a processor and a memory, the memory comprising instructions executable by the processor whereby the MME is operative to perform the method according to any one of claims 6-12.

## Patentansprüche

1. Verfahren (1000), das von einer ersten Mobilitätsverwaltungsentität, MME, durchgeführt wird, wobei das Verfahren umfasst:
Senden (S1001) eines Indikators für eine Paketdatennetzwerkverbindung, PDN-Verbindung, an eine zweite MME,
wobei der Indikator anzeigt, ob die PDN-Verbindung aus einem evolvierten Paketsystem, EPS, in ein System der fünften Generation, 5GS, bewegt werden darf, und
wobei der Indikator in einem Anzeigeflag-Informationselement, IE, einer Kontextantwortnachricht oder Standortwechselweiterleitungsanforderung für die PDN-Verbindung umfasst ist.

2. Verfahren nach Anspruch 1, wobei der Indikator anzeigt, ob die PDN-Verbindung aus dem EPS über N26 in das 5GS bewegt werden darf.

3. Verfahren nach Anspruch 1 oder 2, wobei der Indikator basierend auf einer Benutzereinrichtungsnetzwerkfähigkeit, UE-Netzwerkfähigkeit, und/oder UE-Abonnementdaten bestimmt wird.

4. Verfahren nach einem der Ansprüche 1 bis 3, wobei das Verfahren ferner umfasst:
Empfangen (S1003) einer Kontextanforderung von der zweiten MME; und
wobei das Senden eines Indikators für eine PDN-Verbindung an eine zweite MME ferner umfasst:
Senden einer Kontextantwortnachricht an die zweite MME, wobei der Indikator in der Kontextantwortnachricht für die PDN-Verbindung umfasst ist.

5. Verfahren nach einem der Ansprüche 1 bis 3, wobei das Senden eines Indikators für eine PDN-Verbindung an eine zweite MME ferner umfasst:
Senden einer Standortwechselweiterleitungsanforderung an die zweite MME, wobei optional der Indikator in einem Anzeigeflag-Informationselement, IE, der Standortwechselweiterleitungsanforderung für die PDN-Verbindung umfasst ist.

6. Verfahren (1400), das von einer Mobilitätsverwaltungsentität, MME, durchgeführt wird, wobei das Verfahren umfasst:
Senden (S1401) einer ersten Nachricht an einen Gateway-Knoten;
wobei die erste Nachricht aktualisierte Informationen umfasst, wobei die aktualisierten Informationen eine Änderung des Zusammenarbeitsstatus mit einem System der fünften Generation, 5GS, für eine Paketdatennetzwerkverbindung, PDN-Verbindung, anzeigen.

7. Verfahren nach Anspruch 6, wobei der Gateway-Knoten eine PDN-Gateway-Steuerebene, PGW-C, kombiniert mit einer Sitzungsverwaltungsfunktion, SMF, ist.

8. Verfahren nach Anspruch 6 oder 7, wobei das Verfahren ferner umfasst: Empfangen (S1403) einer zweiten Nachricht vom Gateway-Knoten in Reaktion auf die erste Nachricht.

9. Verfahren nach Anspruch 8, wobei die zweite Nachricht 5GS-Parameter umfasst, die mit der PDN-Verbindung assoziiert sind, wobei die 5GS-Parameter vom Gateway-Knoten erzeugt werden; oder
wobei die zweite Nachricht 5GS-Dienstqualitätsparameter, 5GS-QoS-Parameter, umfasst, die mit der PDN-Verbindung assoziiert sind; oder
wobei die zweite Nachricht eine erste Anweisung zum Entfernen der mit der PDN-Verbindung assoziierten 5GS-Parameter umfasst; oder
wobei die zweite Nachricht eine zweite Anweisung zum Entfernen der mit der PDN-Verbindung assoziierten 5GS-QoS-Parameter umfasst.

10. Verfahren nach einem der Ansprüche 6 bis 9, wobei die MME mit dem Gateway-Knoten über ein bedienendes Gateway, SGW, kommuniziert und/oder wobei die mit der PDN-Verbindung assoziierten 5GS-Parameter Einzel-Netzwerk-Slice-Auswahlhilfsinformationen, S-NSSAI, QoS-Regeln, eine aggregierte maximale Bitrate einer Sitzung, AMBR, und eine QoS-Flussbeschreibung umfassen, und wobei die mit der PDN-Verbindung assoziierten 5GS-QoS-Parameters QoS-Regeln, eine AMBR einer Sitzung und eine QoS-Flussbeschreibung umfassen.

11. Verfahren nach einem der Ansprüche 8 bis 10, wobei die erste Nachricht eine Trägermodifizierungsanforderung oder eine Änderungsbenachrichtigungsanforderung ist; und/oder
wobei die zweite Nachricht eine Trägeraktualisierungsanforderung ist.

12. Verfahren nach Anspruch 11, wobei die Trägeraktualisierungsanforderung ein (e)PCO-IE zum Übertragen der 5GS-Parameter oder 5GS-QoS-Parameter umfasst;
wobei das (e)PCO-IE ferner eine PDU-Sitzungs-ID umfasst, wenn die PDU-Sitzungs-ID ursprünglich vom Gateway-Knoten für die PDN-Sitzung erzeugt wird;
wobei das (e)PCO-IE von der MME transparent an eine mit der PDU-Verbindung assoziierte UE weitergeleitet wird.

13. Erste Mobilitätsverwaltungsentität, MME, umfassend einen Prozessor und einen Speicher, wobei der Speicher Anweisungen umfasst, die vom Prozessor ausgeführt werden können, wodurch die erste MME zum Durchführen des Verfahrens nach einem der Ansprüche 1 bis 5 ausgelegt ist.

14. Mobilitätsverwaltungsentität, MME, umfassend einen Prozessor und einen Speicher, wobei der Speicher Anweisungen umfasst, die vom Prozessor ausgeführt werden können, wodurch die MME zum Durchführen des Verfahrens nach einem der Ansprüche 6 bis 12 ausgelegt ist.

## Revendications

1. Procédé (1000) réalisé par une première entité de gestion de mobilité, MME, le procédé comprenant :
l'envoi (S1001) d'un indicateur pour une connexion de réseau de données en paquets, PDN, à une deuxième MME,
dans lequel l'indicateur indique si la connexion PDN est autorisée à être déplacée d'un système de paquet évolué, EPS, à un système de cinquième génération, 5GS, et
dans lequel l'indicateur est compris dans un élément d'informations, IE, de drapeau d'indication d'un message de réponse de contexte ou d'une demande de relocalisation de transfert pour la connexion PDN.

2. Procédé selon la revendication 1, dans lequel l'indicateur indique si la connexion PDN est autorisée à être déplacée de l'EPS au 5GS via N26.

3. Procédé selon la revendication 1 ou 2, dans lequel l'indicateur est déterminé sur la base de données de capacité de réseau d'équipement utilisateur, UE, et/ou d'abonnement UE.

4. Procédé selon l'une quelconque des revendications 1 à 3, dans lequel le procédé comprend en outre :
la réception (S1003) d'une demande de contexte depuis la deuxième MME ; et
dans lequel l'envoi d'un indicateur pour une connexion PDN à une deuxième MME comprend en outre :
l'envoi d'un message de réponse de contexte à la deuxième MME, dans lequel l'indicateur est compris dans le message de réponse de contexte pour la connexion PDN.

5. Procédé selon l'une quelconque des revendications 1 à 3, dans lequel l'envoi d'un indicateur pour une connexion PDN à une deuxième MME comprend en outre :
l'envoi d'une demande de relocalisation de transfert à la deuxième MME, dans lequel facultativement l'indicateur est compris dans un élément d'informations, IE, de drapeau d'indication de la demande de relocalisation de transfert pour la connexion PDN.

6. Procédé (1400) réalisé par une entité de gestion de mobilité, MME, le procédé comprenant :
l'envoi (S1401) d'un premier message à un noeud de passerelle ;
dans lequel le premier message comprend des informations mises à jour, les informations mises à jour indiquant un changement de statut d'interopérabilité avec un système de cinquième génération, 5GS, pour une connexion de réseau de données en paquets, PDN.

7. Procédé selon la revendication 6, dans lequel le noeud de passerelle est un plan de commande de passerelle PDN, PGW-C, combiné avec une fonction de gestion de session, SMF.

8. Procédé selon la revendication 6 ou 7, dans lequel le procédé comprend en outre :
la réception (S1403) d'un deuxième message depuis le noeud de passerelle en réponse au premier message.

9. Procédé selon la revendication 8, dans lequel le deuxième message comprend des paramètres 5GS associés à la connexion PDN, dans lequel les paramètres 5GS sont générés par le noeud de passerelle ; ou
dans lequel le deuxième message comprend des paramètres de qualité de service, QoS, 5GS associés à la connexion PDN ; ou
dans lequel le deuxième message comprend une première instruction de suppression de paramètres 5GS associés à la connexion PDN ; ou
dans lequel le deuxième message comprend une deuxième instruction de suppression de paramètres de QoS 5GS associés à la connexion PDN.

10. Procédé selon l'une quelconque des revendications 6 à 9, dans lequel la MME communique avec le noeud de passerelle via une passerelle de desserte, SGW, et/ou dans lequel les paramètres 5GS associés à la connexion PDN comprennent des informations d'aide à la sélection de tranche de réseau unique, S-NSSAI, des règles de QoS, un débit binaire maximal agrégé, AMBR, de session et une description de flux de QoS, et dans lequel les paramètres de QoS 5GS associés à la connexion PDN comprennent des règles de QoS, un AMBR de session et une description de flux de QoS.

11. Procédé selon l'une quelconque des revendications 8 à 10, dans lequel le premier message est une demande de modification de support ou une demande de notification de changement ; et/ou
dans lequel le deuxième message est une demande de mise à jour de support.

12. Procédé selon la revendication 11, dans lequel la demande de mise à jour de support comprend un IE (e)PCO pour porter les paramètres 5GS ou les paramètres de QoS 5GS ;
dans lequel l'IE (e) PCO comprend en outre un ID de session de PDU, lorsque l'ID de session de PDU est initialement généré par le noeud de passerelle pour la connexion PDN ;
dans lequel l'IE (e)PCO est transféré de manière transparente par la MME à un UE associé à la connexion PDN.

13. Première entité de gestion de mobilité, MME, comprenant un processeur et une mémoire, la mémoire comprenant des instructions exécutables par le processeur de telle manière que la première MME soit fonctionnelle pour réaliser le procédé selon l'une quelconque des revendications 1 à 5.

14. Entité de gestion de mobilité, MME, comprenant un processeur et une mémoire, la mémoire comprenant des instructions exécutables par le processeur de telle manière que la MME soit fonctionnelle pour réaliser le procédé selon l'une quelconque des revendications 6 à 12.
